# EUROPEAN PATENT SPECIFICATION

(11) **EP 4 332 361 B1**
(45) Date of publication and mention of the grant of the patent: **25.03.2026**
(21) Application number: 23193571.9
(22) Date of filing: 25.08.2023
(51) Int. Cl.: F02C 7/22, F02C 7/228, F02C 7/232, F02C 9/26, F23R 3/34, F02M 45/08, F02M 47/02, F02M 63/00

(54) **PROPORTIONAL FORCE MODIFICATION OF PASSIVE SPOOL FOR CONTROL OF SIMPLEX CIRCUIT OF FUEL NOZZLES**
PROPORTIONALE KRAFTVERÄNDERUNG EINER PASSIVEN SPULE ZUR STEUERUNG EINES SIMPLEX-SCHALTKREISES VON BRENNSTOFFDÜSEN
MODIFICATION DE FORCE PROPORTIONNELLE DE TIROIR PASSIF POUR LA COMMANDE D'UN CIRCUIT SIMPLEX D'INJECTEURS DE CARBURANT

(30) Priority: 26.08.2022 US 202217896491; 21.07.2023 US 202318224816
(43) Date of publication of application: 06.03.2024
(73) Proprietor: Hamilton Sundstrand Corporation, Charlotte, NC 28217-4578 (US); Collins Engine Nozzles, Inc., West Des Moines, IA 50265 (US)
(72) Inventor: WILLIAMS, Brandon P., Johnston, 50131 (US); RYON, Jason A., Carlisle, 50047 (US); HAUSJAAHABINK, Todd, Armherst, 01002 (US); LOKHANDWALLA, Murtuza, South Windsor, CT 06074 (US); REUTER, Charles E., Granby, 06035 (US); KOKAS, Jay W., Bloomfield, 06002 (US); VERSAILLES, Richard E., New Hartford, 06057 (US); FERRAROTTI, Michael, Durham, 06422 (US); ROURKE, Russell P., Jr, East Granby, 06026 (US)
(74) Representative: Dehns

(56) References cited:
- EP-A1- 3 070 408
- EP-A2- 2 497 923
- EP-A2- 2 597 285
- US-A1- 2013 061 599
- US-B2- 10 450 961

## Description

### BACKGROUND

### 1. Field

The present disclosure relates to injectors and nozzles, and more particularly to fuel injection such as in gas turbine engines.

### 2. Description of Related Art

Conventional fuel injectors that contain flow scheduling valves are passive, where the flow response is fully based on the input pressure. A resistive spring provides the force balance to limit the rate at which the schedule valve opens. These valves can be used to divide flow as well, providing multiple flow paths that can be sequenced/schedule based on inlet fuel pressure, valve open area, and any downstream flow devices such as atomizers. At relatively low flow conditions, the flow schedule valve is largely responsible for most of the metering and therefore consumes / requires the majority of the fuel pressure. At relatively high flow conditions, there is a transition of pressure drop from the valve to other components downstream of the valve. Gas turbine combustors will typically have a natural frequency that may become excited when a certain heat release is attained. Quite often, this is at ground conditions; however, it can also be a concern at multiple flow conditions. This condition can cause significant levels of noise and occasionally may negatively impact the health of the structural components within and around the combustor.

To mitigate this noise, adjustments to fuel scheduling may be directed, in an attempt to decouple the heat release and noise; however, these attempts require additional flow dividing hardware and fuel manifolds adding significant cost, weight, and power requirements.

The conventional techniques have been considered satisfactory for their intended purpose. However, there is an ever present need for improved systems and methods for adjusting flow in passive injection valves. This disclosure provides a solution for this need. EP 3 070 408 relates to a combustion staging system. EP 2 597 285 relates to fuel-air mixture distribution for gas turbine engine combustors.

### SUMMARY

A system is provided in claims 1 and 6, and includes an injector including a scheduling valve assembly and a nozzle in fluid communication with the valve assembly. The scheduling valve assembly is configured for regulation of flow from an inlet of the injector to the nozzle. The injector includes one fluid circuit between the inlet of the injector and a respective outlet of the nozzle. A solenoid valve is connected in fluid communication with the scheduling valve assembly. The solenoid valve is configured to adjust position of a hydromechanical valve spool of the valve assembly.

The separate valve can be a discrete open/closed valve. It is also contemplated that the separate valve can be a proportional valve with intermediate conditions between fully open and fully closed. The proportional valve can include a proportional solenoid, stepper motor, or a torque motor based servo valve with flapper and nozzle.

The valve spool is biased to a closed position by one or more biasing members of the scheduling valve assembly. The valve spool is configured to regulate flow from the inlet of the injector to the fluid circuit. The valve spool includes a scheduling surface configured to vary flow area through the fluid circuit based on position of the valve spool within the scheduling valve assembly. The solenoid valve has an inlet, an outlet, and a solenoid valve member configured to control flow through the solenoid valve from the inlet to the outlet based on electrical power applied to an electromagnetic coil (128) to apply a force on an armature of the solenoid valve.

In some embodiments, the inlet of the solenoid valve is connected in fluid communication with the inlet of the injector. The outlet of the solenoid valve is connected in fluid communication with the fluid circuit. The outlet of the solenoid valve connects to the fluid circuit at a position in the fluid circuit that is downstream of the valve assembly. The valve spool can include a piston with an orifice therethrough, wherein the piston and orifice are configured to regulate pressure differential across the valve assembly. The orifice can be in fluid communication in series between the inlet of the injector and the inlet of the solenoid valve.

In some embodiments, the solenoid valve is a three-way valve including a first port in fluid communication with the fluid circuit downstream of the inlet of the injector. A second port can be in fluid communication with the inlet of the injector. A third port can be in fluid communication with the valve spool for selectively adjusting position of the valve spool in the valve assembly based on pressure from the inlet of the injector or pressure from the fluid circuit. The first port of the solenoid valve can be connected in fluid communication with a portion of the fluid circuit downstream of the valve spool. The third port can be connected in fluid communication with a back piston of the valve spool.

The injector can be a first injector in a plurality of injectors each connected in fluid communication with a single manifold for supplying fuel to each injector in the plurality of injectors including the fluid circuit of the first injector. A first sub-set of the plurality of injectors can be passive, duplex nozzles each having a primary circuit for use independent of the fluid circuit of the first injector, and a secondary circuit configured to issue fuel together with the fluid circuit of the first injector. The first injector can be a first injector in a second sub-set of the plurality of injectors. Each injector in the second sub-set can be as described above including a respective separate valve as described above connected thereto. A controller can be electrically connected to the solenoid valves for individual control thereof. A controller can be electrically connected to the solenoid valves for ganged control thereof. The first sub-set of injectors can be grouped circumferentially offset from the second sub-set of injectors.

The separate valve can be a binary valve, a modulating valve, a motorized valve, or any other suitable type of valve, e.g. separate from the scheduling valve. The respective separate valve can be a proportional valve with intermediate conditions between fully open and fully closed. Each of the injectors in the plurality of fuel injectors can include a mass flow sensor operatively connected to the controller to provide mass flow feedback to the controller. Loss of electrical power to the separate valve can cause the valve spool to return to a position determined by mechanical components and regulates fuel flow as per a scheduling surface.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional perspective view of a portion an embodiment of a system constructed in accordance with the present disclosure, showing the solenoid connected to adjust position of the otherwise passive hydromechanical valve spool;
Fig. 2 is a schematic view of the system of Fig. 1, showing flow for the valve assembly;
Fig. 3 is a schematic cross-sectional perspective view of another embodiment, showing a three-way solenoid valve;
Fig. 4 is a schematic view of the system of Fig. 1, showing a plurality of injectors including passive and actuated nozzles distributed around a circumferential array, e.g. in a gas turbine engine
Fig. 5 is a schematic diagram of a valve arrangement of Fig. 1, showing a proportional valve in the primary fuel circuit; and
Fig. 6 is a graph of injector flow versus manifold pressure for a valve arrangement of Fig. 1, showing a first baseline, e.g. with the valve of the simplex fuel circuit fully closed, showing a second baseline, e.g. with the valve of the simplex fuel circuit fully open, and showing the area in between the first and second baselines, e.g. which is available with proportional control of a proportional valve of Fig. 5.

### DETAILED DESCRIPTION OF THE PREFERRED EMBODIMENTS

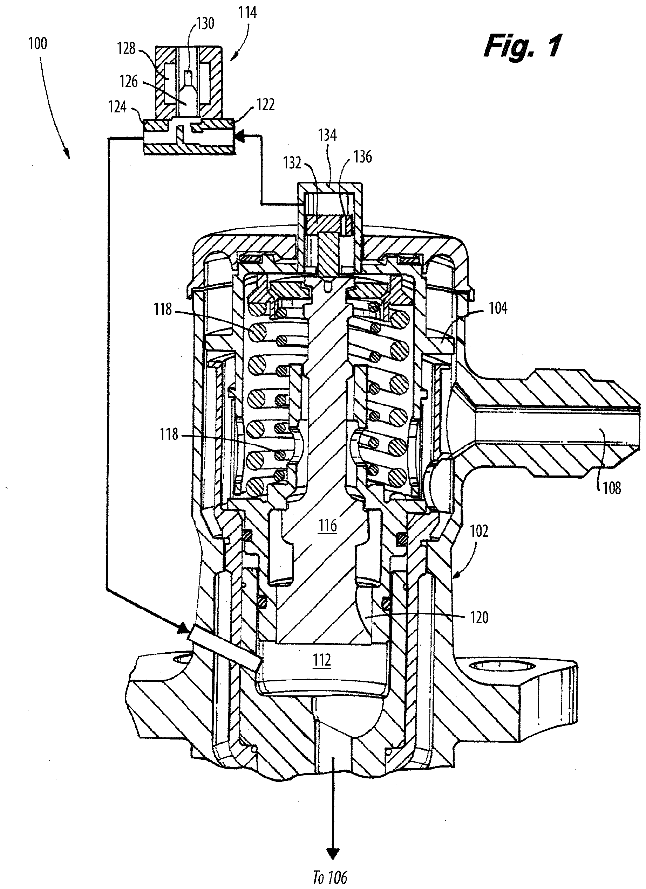

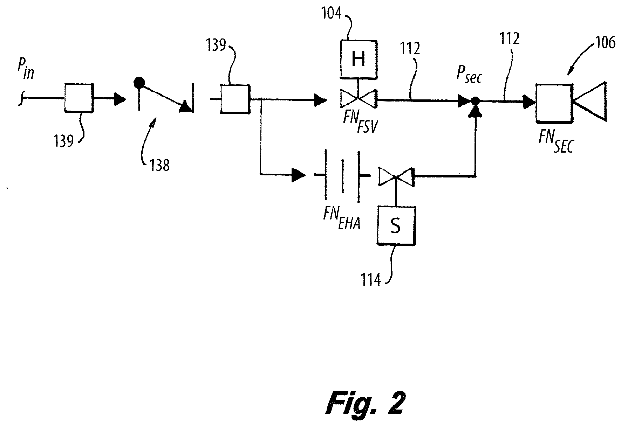

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-6, as will be described. The systems and methods described herein can be used to provide adjustment of otherwise passive valves, e.g. to provide active patternation in fuel injection for gas turbine engines.

The system 100 includes an injector 102 having a scheduling valve assembly 104 and a nozzle 106 (labeled in Fig. 2) in fluid communication with the valve assembly 104. The scheduling valve assembly 104 is configured for regulation of flow from an inlet 108 of the injector 102 to the nozzle 106 (labeled in Fig. 2). The injector 102 includes a fluid circuit 112 between the inlet 108 of the injector and the outlet of the nozzle 106 for issuing flow output from the nozzle 106 (labeled in Fig. 2). A solenoid valve 114 is connected in fluid communication with the scheduling valve assembly 104. The solenoid valve 114 is configured to adjust position of a hydromechanical valve spool 116 of the valve assembly 104.

The valve spool 116 is biased to a closed position, i.e. it is biased upward as oriented in Fig. 1, by one or more biasing members 118 of the scheduling valve assembly 104. The valve spool 116 is configured to regulate flow from the inlet 108 of the injector 102 to the fluid circuit 112. The valve spool 116 includes a scheduling surface 120 configured to vary flow area through the secondary circuit 112 based on position of the valve spool 116 within the scheduling valve assembly 104, i.e. as the valve spool 116 moves back and forth in the vertical direction as oriented in Fig. 1. A scheduling valve with a scheduling surface is described in U.S. Patent No. 5,732,730

The solenoid valve 114 has an inlet 122, an outlet 124, and a solenoid valve member 126 configured to control flow through the solenoid valve 114 from the inlet 122 to the outlet 124 based on electrical power applied to an electromagnetic coil 128 to apply a force on an armature 130 of the solenoid valve 114 that drives the valve member 126. The inlet 122 of the solenoid valve 114 is connected in fluid communication with the inlet 108 of the injector 102. The outlet 124 of the solenoid valve 114 is connected in fluid communication with the fluid circuit 112 at a position in the fluid circuit 112 that is downstream of the valve assembly 104.

The valve spool 116 includes a piston 132 in a piston chamber 134. An orifice 136 is defined through the piston 132 in the axial direction of movement of the piston 132. The piston 132 and orifice 136 are configured to regulate pressure differential across the valve assembly 104, e.g. the piston 132 and orifice 136 are sized to minimize the flow allowed to bypass the spool 116 and gain a change in sensed diameter of the spool 116 while achieving the desired change in fuel flow. The orifice 136 is in fluid communication in series between the inlet 108 of the injector 102 and the inlet 122 of the solenoid valve 114. The piston 132 is connected to the valve spool 116, e.g. as part of the valve spool 116.

With reference now to Fig. 2, the injector 102 is shown schematically. Fuel supplied from a manifold at Pᵢₙ can be regulated with a metering valve 138. One or more check valves 139 can be included upstream or downstream of the metering valve 138 to prevent leaking through the injector 102 when there is supposed to be no flow through the injector 102. The check valve 139 can be dedicated to the injector 102, or can be shared by several injectors 102. Fig. 2 shows the fluid circuit 112, and how the valve assembly 104 and solenoid valve 114 connect to the fluid circuit 112. The solenoid valve 114 controls a bypass of the portion of the fluid circuit 112, namely the portion that passes through valve assembly 104. By using electrical control of the solenoid valve 114 to regulate how much flow passes therethrough, the flow from the solenoid valve 114 into the fluid circuit 112 bypassing the valve assembly 104 can be used to adjust the position of the valve spool 116 (shown in Fig. 1) up or down as oriented in Fig. 1. This gives fine control over the valve assembly 104, especially for fine control over the flow through the fluid circuit 112. Moreover, the solenoid valve 114 can be sized to be smaller than is needed for full control authority over the valve spool 116 (labeled in Fig. 1), since the flow through the solenoid valve only needs to make adjustments to the position of the valve spool 116 of Fig. 1, which otherwise positions itself within the valve assembly 104 based on the pressure at the inlet 108 of the injector 102, Pᵢₙ. In the event of electrical power outage for the solenoid valve 114, there is no interference with the ordinary, passive operation of the valve spool 116 of Fig. 1.

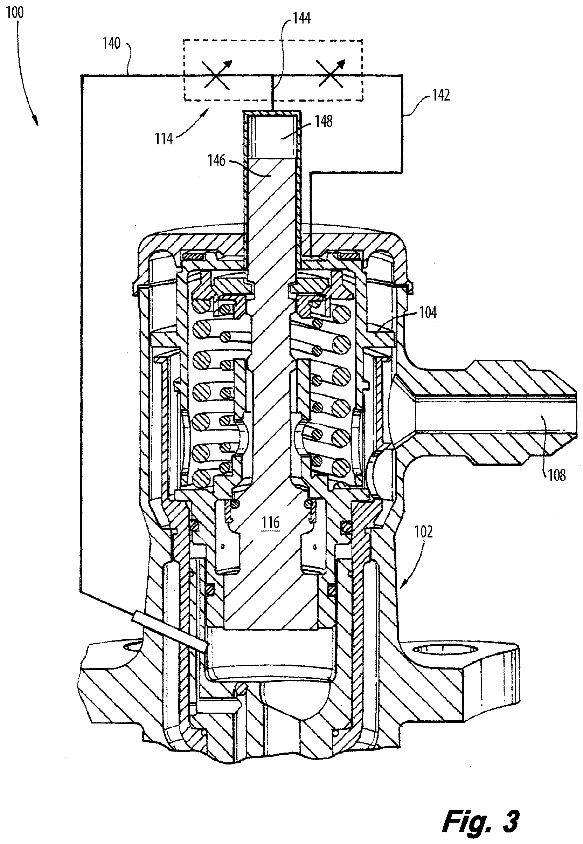

With reference to Fig. 3, another embodiment of an injector 102 is shown, with a similar valve assembly 104 to that described above, but with a three way solenoid valve 114. The solenoid valve 114 is a three-way valve with a first port 140 in fluid communication with the fluid circuit 112. A second port 142 is in fluid communication with the inlet 108 of the injector 102. A third port 144 is in fluid communication with the valve spool 116 for selectively adjusting position of the valve spool 116 in the valve assembly 104 based on either pressure from the inlet 108 of the injector 102 or pressure from the fluid circuit 112 downstream of the valve assembly 104. The third port 144 is connected in fluid communication with a back piston 146 of the valve spool 116. Changing pressure in the piston chamber 148 of the back piston 146 by toggling between connecting the third port 144 to either the first port 140 or the second port 142 (which are at different respective pressures: P_{sec}, the pressure of the fluid circuit 112 downstream of the valve assembly 104 and Pᵢₙ, the inlet pressure of the injector 102, respectively) allows the three-way solenoid valve 114 in Fig. 3 to adjust the position of the valve spool 116 in the valve assembly 116 similar to the solenoid valve 114 described above with reference to Fig. 1, including passive operation in the event of electrical power outage.

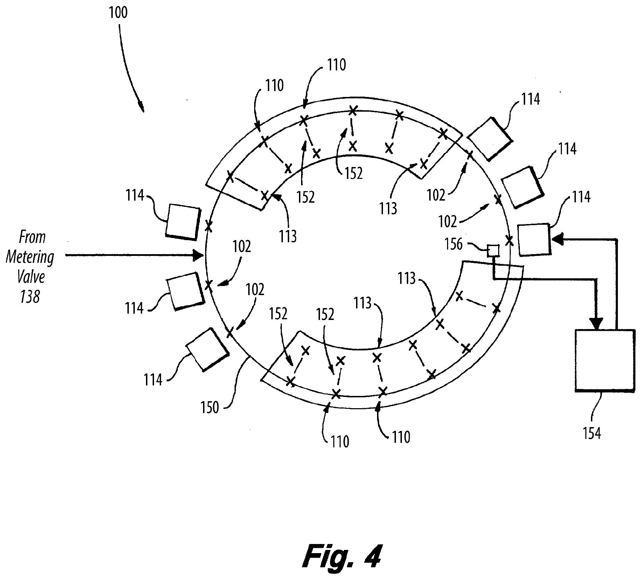

With reference now to Fig. 4, the system 100 includes a plurality of simplex injectors 102, each with a solenoid valve 114 and a single fluid circuit as shown in either Figs. 1 or 2. Each of the injectors 102 is connected in fluid communication with a single manifold 150 for supplying fuel to each injector 102 in the plurality of injectors 102. Another sub-set of injectors 152 are passive, duplex nozzles with primary circuits 113 for low turndown, as well as secondary circuits 110 configured to issue fuel together with the fluid circuits 112 of the simplex injector 102. A controller 154 is electrically connected to the solenoid valves 114 for individual control thereof (in Fig. 4, only one solenoid valve 114 is shown connected to the controller 154 for sake of clarity in the drawing). It is also contemplated that the controller 154 can instead be electrically connected to the solenoid valves 114 for ganged control thereof, i.e. where all the valves 114 receive the same command from the controller 154. The first sub-set of injectors 102 is grouped circumferentially offset from the second sub-set of injectors 152. In Fig. 4, there are two groups of three solenoid controlled simplex injectors 102, separated circumferentially from one another by two sets of six passive duplex, injectors 152. Those skilled in the art will readily appreciate that this circumferential arrangement can be modified as needed for a given engine application, that control of the injectors 102 as described herein allows for finely tuned control of the flame in a combustor that is fed by the injectors 102, 152, and that the three solenoid controlled and six passive duplex injectors described here are an example and this disclosure applies to any other suitable combination of passive / active injectors. The control can be based on sensor feedback from one or more sensors 156 in the system 100. The solenoid valve can instead be a binary valve, a modulating valve, a motorized valve, or any other suitable type of valve, e.g. separate from the scheduling valve, such as a torque motor based servo valve with flapper and nozzle.

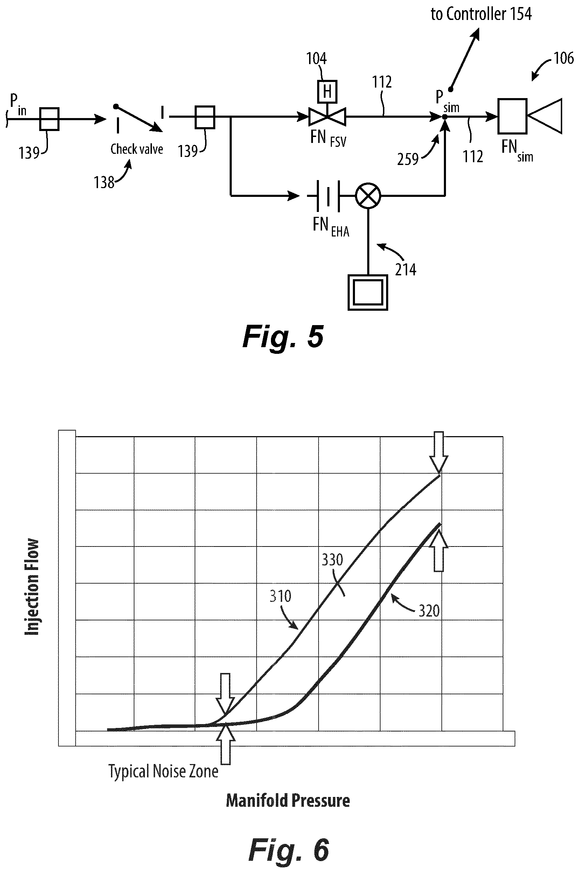

The solenoid valve 114 described above with reference to Figs. 1-3 is a discrete open/closed valve even if a modulating type valve is used, however, with reference now to Fig. 5, it is also contemplated that it can instead be a proportional valve 214, with intermediate conditions between fully open and fully closed. The proportional valve 214 includes a proportional solenoid, a torque motor based servo valve, or a stepper motor. If a stepper motor is used, multiple discrete steps can be used between fully open and fully closed. The check/metering valve or valves 138, 139 is/are upstream of the branch between the lines to the valve assembly 104 and to the proportional valve 214. The scheduling valve assembly 104 is in the fluid circuit 112 for control of flow through the fluid circuit 112. Proportionally controlling the separate valve 214 between fully opened and fully closed states allows for intermediate flow states for fine tuning as needed to combustion conditions. Fig. 6 shows a graph of injector flow rate versus manifold pressure for total flow through the injector through the inlet 108. The first line 310 shows the flow response over a range of manifold pressures with the separate valve 214 fully open, and the second line 320 shows the same but for the separate valve 214 fully closed. Proportional control between fully closed and fully opened allows fine tuning of the flow at a given manifold pressure to the area 330 between the two lines 310 and 320. The large arrows in Fig. 6 indicate the range of the typical noise zone, and the area 330 between lines 310 and 320 extends over a considerable percentage of the typical noise zone. Proportional control within the area 330 between the lines 310, 320, not just the on/off states of lines 310 and 320, can provide benefits including improved pull away, light around, noise mitigation, and injector to injector total flow profiling at maximum power to improve turbine life.

With continued reference to Figs. 4 and 5, each of the injectors 102, including the passive injectors 152, can include a mass flow sensor 259 embedded in contact with fuel passing through the injector 102/152 operatively connected to the controller 154 to provide mass flow feedback to the controller 154. The sensor signals can be used to control actuators of the electrically-controlled valves 214 to gain more / less uniformity as desired during operation. The sensor 259 can include several devices in isolation or combination, such as a hot wire anemometer, a pitot tube, an ultrasonic transducer, an NIST (National Institute of Standards and Technology) type calibration orifice, a thermocouple, a pressure transducer, a turbine wheel, a Coriolis meter, a chemiluminescence sensor for sensing a signal from flame, or any other suitable type of sensor. The sensor 259 is used to control flow in the circuit 112, so can be located anywhere in the circuit 112 upstream or downstream of the sub-circuit for the valve 214.

There are various potential benefits of systems and methods as disclosed herein, including the following. Failure modes of the solenoids add little if any additional risk for operation of the injectors. Loss (intentional or otherwise) of electrical power to the solenoid causes the valve spool to return to a position determined by the mechanical components and regulates fuel flow as per the scheduling surface. Systems and methods as disclosed herein allow for removal of the engine flow divider valve and subsequent fuel manifolds, fittings, and the like, and allow both primary and secondary circuits to be supplied by a single manifold while still providing active control. The valve assemblies 104 (labeled in Fig. 1) of the injectors 102 can work as a system. For example, if one valve is set to reduce flow, others can be opened to increase flow to compensate. Incorporation of the one or more sensors 156, e.g. mass-flow sensors, pressure sensor(s), and/or position sensors, can allow for health monitoring and active flow control. The valves can be gradually actuated to minimize potential pressure spikes within the fuel system 100. With systems and methods as disclosed herein, failure of the electrically-controlled valve 114/214 results in limited flow to the simplex circuit, not total loss of the simplex circuit. Systems and methods as disclosed herein can allow for independent control of the simplex circuit to mitigate acoustics, emissions or flame out. Multiple valves can work together as a system, e.g. if one valve is set to reduce flow, others can be opened to increase flow to compensate as the system adapts to stabilize conditions in the combustor. Incorporation of mass-flow sensor, pressure sensor(s), and/or position sensor allows for health monitoring, and for active flow control. Proportional control allows for valves to be gradually actuated to minimize potential pressure spikes within the fuel system. Tailoring flow proportionally between full state switch can improve operability of the engine, including ignition, pull away, and noise mitigations.

The methods and systems of the present disclosure, as described above and shown in the drawings, provide for adjustment of otherwise passive valves, e.g. to provide active pattemation in fuel injection for gas turbine engines. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system for a gas turbine engine, the system comprising:
an injector (102) including a scheduling valve assembly (104) and a nozzle (106) in fluid communication with the valve assembly (104), wherein the scheduling valve assembly (104) is configured for regulation of flow from an inlet (108) of the injector (102) to the nozzle (106), wherein the injector (102) includes one fluid circuit (112) between the inlet (108) of the injector and a respective outlet of the nozzle (106); and
a separate valve (114) connected in fluid communication with the scheduling valve assembly (104), wherein the separate valve is configured to adjust position of a hydromechanical valve spool (116) of the valve assembly;
wherein the valve spool (116) is biased to a closed position by one or more biasing members of the scheduling valve assembly, wherein the valve spool is configured to regulate flow from the inlet of the injector to the fluid circuit, wherein the valve spool includes a scheduling surface configured to vary flow area through the fluid circuit based on position of the valve spool within the scheduling valve assembly; **characterized in that**
the separate valve is a solenoid valve (114) that has an inlet (122), an outlet (124), and a solenoid valve member (126) configured to control flow through the solenoid valve (114) from the inlet (122) to the outlet (124) based on electrical power applied to an electromagnetic coil (128) to apply a force on an armature of the solenoid valve, and wherein the inlet (122) of the solenoid valve is connected in fluid communication with the inlet (108) of the injector, and **in that** the outlet (124) of the solenoid valve is connected in fluid communication with the fluid circuit (112), wherein the outlet (124) of the solenoid valve connects to the fluid circuit (112) at a position in the fluid circuit (112) that is downstream of the valve assembly (104).

2. The system as recited in claim 1, wherein the separate valve is a discrete open/closed valve

3. The system as recited in claim 1, wherein the separate valve is a proportional valve with intermediate conditions between fully open and fully closed.

4. The system as recited in claim 3, wherein the proportional valve includes a proportional solenoid, a stepper motor, or a torque motor based servo valve with flapper and nozzle.

5. The system as recited in any preceding claim, wherein the valve spool (116) includes a piston (132) with an orifice (136) therethrough, wherein the piston (132) and orifice (136) are configured to regulate pressure differential across the valve assembly (104), and more preferably wherein the orifice (136) is in fluid communication in series between the inlet (108) of the injector and the inlet (122) of the solenoid valve.

6. A system for a gas turbine engine, the system comprising:
an injector (102) including a scheduling valve assembly (104) and a nozzle (106) in fluid communication with the valve assembly (104), wherein the scheduling valve assembly (104) is configured for regulation of flow from an inlet (108) of the injector (102) to the nozzle (106), wherein the injector (102) includes one fluid circuit (112) between the inlet (108) of the injector and a respective outlet of the nozzle (106); and
a separate valve (114) connected in fluid communication with the scheduling valve assembly (104), wherein the separate valve is configured to adjust position of a hydromechanical valve spool (116) of the valve assembly;
wherein the valve spool (116) is biased to a closed position by one or more biasing members of the scheduling valve assembly, wherein the valve spool is configured to regulate flow from the inlet of the injector to the fluid circuit, wherein the valve spool includes a scheduling surface configured to vary flow area through the fluid circuit based on position of the valve spool within the scheduling valve assembly; **characterized in that**:
the separate valve is a three-way valve (114) including:
a first port (140) in fluid communication with the fluid circuit downstream of the inlet of the injector;
a second port (142) in fluid communication with the inlet of the injector; and
a third port (144) in fluid communication with the valve spool for selectively adjusting position of the valve spool in the valve assembly based on pressure from the inlet of the injector or pressure from the fluid circuit.

7. The system as recited in claim 6, wherein the first port (140) of the separate valve is connected in fluid communication with a portion of the fluid circuit downstream of the valve spool.

8. The system as recited in claim 6, wherein the third port (144) is connected in fluid communication with a back piston of the valve spool.

9. The system as recited in any preceding claim, further comprising a plurality of injectors and a single manifold, wherein the injector (102) is a first injector in the plurality of injectors each connected in fluid communication with the single manifold, and wherein the single manifold is for supplying fuel to each injector in the plurality of injectors including the fluid circuit of the first injector.

10. The system as recited in claim 9, wherein a first sub-set of the plurality of injectors are passive, duplex nozzles each having a primary circuit for use independent of the fluid circuit of the first injector, and a secondary circuit configured to issue fuel together with the fluid circuit of the first injector.

11. The system as recited in claim 10, wherein the first injector (102) is a first injector in a second sub-set of the plurality of injectors, wherein each injector in the second sub-set is as recited in claim 1 including a respective separate valve as recited in claim 1 connected thereto.

12. The system as recited in claim 11, further comprising a controller (154) electrically connected to the separate valves for ganged or individual control thereof, and preferably wherein the respective separate valve is a proportional valve with intermediate conditions between fully open and fully closed, and more preferably wherein each of the injectors in the plurality of fuel injectors includes a mass flow sensor operatively connected to the controller to provide mass flow feedback to the controller.

13. The system as recited in claim 11, wherein the first sub-set of injectors is grouped circumferentially offset from the second sub-set of injectors.

14. The system as recited in any preceding claim, wherein loss of electrical power to the separate valve causes the valve spool (116) to return to a position determined by mechanical components and regulates fuel flow as per a scheduling surface.

## Patentansprüche

1. System für ein Gasturbinentriebwerk, wobei das System umfasst:
einen Injektor (102) einschließlich einer Regelventilbaugruppe (104) und einer Düse (106) in Fluidkommunikation mit der Ventilbaugruppe (104), wobei die Regelventilbaugruppe (104) dazu konfiguriert ist, den Fluss von einem Einlass (108) des Injektors (102) zu der Düse (106) zu regeln, wobei der Injektor (102) einen Fluidkreislauf (112) zwischen dem Einlass (108) des Injektors und einem entsprechenden Auslass der Düse (106) einschließt; und
ein separates Ventil (114), das in Fluidkommunikation mit der Regelventilbaugruppe (104) verbunden ist, wobei das separate Ventil dazu konfiguriert ist, die Position eines hydromechanischen Ventilschiebers (116) der Ventilbaugruppe anzupassen;
wobei der Ventilschieber (116) durch ein oder mehrere Vorspannelemente der Regelventilbaugruppe in eine geschlossene Position vorgespannt ist, wobei der Ventilschieber dazu konfiguriert ist, den Fluss von dem Einlass des Injektors zu dem Fluidkreislauf zu regeln, wobei der Ventilschieber eine Regeloberfläche einschließt, die dazu konfiguriert ist, eine Flussfläche durch den Fluidkreislauf basierend auf der Position des Ventilschiebers innerhalb der Regelventilbaugruppe zu variieren; **dadurch gekennzeichnet, dass**:
das separate Ventil ein Magnetventil (114) ist, das einen Einlass (122), einen Auslass (124) und ein Magnetventilelement (126) aufweist, das dazu konfiguriert ist, den Fluss durch das Magnetventil (114) von dem Einlass (122) zu dem Auslass (124) basierend auf elektrischer Leistung zu steuern, die an eine elektromagnetische Spule (128) angelegt wird, um eine Kraft auf einen Anker des Magnetventils auszuüben, und wobei der Einlass (122) des Magnetventils in Fluidkommunikation mit dem Einlass (108) des Injektors verbunden ist, und dass der Auslass (124) des Magnetventils in Fluidkommunikation mit dem Fluidkreislauf (112) verbunden ist, wobei der Auslass (124) des Magnetventils mit dem Fluidkreislauf (112) an einer Position in dem Fluidkreislauf (112) verbunden ist, die stromabwärts der Ventilbaugruppe (104) liegt.

2. System nach Anspruch 1, wobei das separate Ventil ein diskretes Auf/Zu-Ventil ist.

3. System nach Anspruch 1, wobei das separate Ventil ein Proportionalventil mit Zwischenzuständen zwischen vollständig offen und vollständig geschlossen ist.

4. System nach Anspruch 3, wobei das Proportionalventil einen Proportionalmagneten, einen Schrittmotor oder ein auf einem Torquemotor basierendes Servoventil mit Prallplatte und Düse einschließt.

5. System nach einem der vorhergehenden Ansprüche, wobei der Ventilschieber (116) einen Kolben (132) mit einer Blende (136) dort hindurch einschließt, wobei der Kolben (132) und die Blende (136) dazu konfiguriert sind, eine Druckdifferenz über die Ventilbaugruppe (104) zu regeln, und wobei bevorzugter die Blende (136) in Fluidkommunikation in Reihe zwischen dem Einlass (108) des Injektors und dem Einlass (122) des Magnetventils ist.

6. System für ein Gasturbinentriebwerk, wobei das System umfasst:
einen Injektor (102) einschließlich einer Regelventilbaugruppe (104) und einer Düse (106) in Fluidkommunikation mit der Ventilbaugruppe (104), wobei die Regelventilbaugruppe (104) dazu konfiguriert ist, den Fluss von einem Einlass (108) des Injektors (102) zu der Düse (106) zu regeln, wobei der Injektor (102) einen Fluidkreislauf (112) zwischen dem Einlass (108) des Injektors und einem entsprechenden Auslass der Düse (106) einschließt; und
ein separates Ventil (114), das in Fluidkommunikation mit der Regelventilbaugruppe (104) verbunden ist, wobei das separate Ventil dazu konfiguriert ist, die Position eines hydromechanischen Ventilschiebers (116) der Ventilbaugruppe anzupassen;
wobei der Ventilschieber (116) durch ein oder mehrere Vorspannelemente der Regelventilbaugruppe in eine geschlossene Position vorgespannt ist, wobei der Ventilschieber dazu konfiguriert ist, den Fluss von dem Einlass des Injektors zu dem Fluidkreislauf zu regeln, wobei der Ventilschieber eine Regeloberfläche einschließt, die dazu konfiguriert ist, eine Flussfläche durch den Fluidkreislauf basierend auf der Position des Ventilschiebers innerhalb der Regelventilbaugruppe zu variieren; **dadurch gekennzeichnet, dass**:
das separate Ventil ein Dreiwegeventil (114) ist, das Folgendes einschließt:
einen ersten Anschluss (140) in Fluidkommunikation mit dem Fluidkreislauf stromabwärts des Einlasses des Injektors;
einen zweiten Anschluss (142) in Fluidkommunikation mit dem Einlass des Injektors; und
einen dritten Anschluss (144) in Fluidkommunikation mit dem Ventilschieber zum selektiven Anpassen der Position des Ventilschiebers in der Ventilbaugruppe basierend auf Druck von dem Einlass des Injektors oder Druck von dem Fluidkreislauf.

7. System nach Anspruch 6, wobei der erste Anschluss (140) des separaten Ventils in Fluidkommunikation mit einem Teil des Fluidkreislaufs stromabwärts des Ventilschiebers verbunden ist.

8. System nach Anspruch 6, wobei der dritte Anschluss (144) in Fluidkommunikation mit einem Rückseitenkolben des Ventilschiebers verbunden ist.

9. System nach einem der vorhergehenden Ansprüche, ferner umfassend eine Vielzahl von Injektoren und einen einzelnen Verteiler, wobei der Injektor (102) ein erster Injektor in der Vielzahl von Injektoren ist, die jeweils in Fluidkommunikation mit dem einzelnen Verteiler verbunden sind, und wobei der einzelne Verteiler dazu konfiguriert ist, Kraftstoff jedem Injektor in der Vielzahl von Injektoren einschließlich des Fluidkreislaufs des ersten Injektors zuzuführen.

10. System nach Anspruch 9, wobei ein erster Teilsatz der Vielzahl von Injektoren passive Duplexdüsen sind, die jeweils einen Primärkreislauf zur Verwendung unabhängig von dem Fluidkreislauf des ersten Injektors und einen Sekundärkreislauf aufweisen, der dazu konfiguriert ist, Kraftstoff zusammen mit dem Fluidkreislauf des ersten Injektors auszugeben.

11. System nach Anspruch 10, wobei der erste Injektor (102) ein erster Injektor in einem zweiten Teilsatz der Vielzahl von Injektoren ist, wobei jeder Injektor in dem zweiten Teilsatz nach Anspruch 1 ist, einschließlich eines entsprechenden separaten Ventils nach Anspruch 1, das damit verbunden ist.

12. System nach Anspruch 11, ferner umfassend ein Steuergerät (154), das elektrisch mit den separaten Ventilen zur gruppenweisen oder individuellen Steuerung davon verbunden ist, und wobei vorzugsweise das entsprechende separate Ventil ein Proportionalventil mit Zwischenzuständen zwischen vollständig offen und vollständig geschlossen ist, und wobei bevorzugter jeder der Injektoren in der Vielzahl von Kraftstoffinjektoren einen Massenflusssensor einschließt, der operativ mit dem Steuergerät verbunden ist, um Massenflussrückkopplung an das Steuergerät bereitzustellen.

13. System nach Anspruch 11, wobei der erste Teilsatz von Injektoren in Umfangsrichtung versetzt von dem zweiten Teilsatz von Injektoren gruppiert ist.

14. System nach einem der vorhergehenden Ansprüche, wobei Verlust an elektrischer Leistung an das separate Ventil bewirkt, dass der Ventilschieber (116) in eine Position zurückkehrt, die durch mechanische Komponenten bestimmt wird, und Kraftstofffluss gemäß einer Regeloberfläche regelt.

## Revendications

1. Système pour un moteur à turbine à gaz, le système comprenant :
un injecteur (102) incluant un ensemble de vannes de régulation (104) et une buse (106) en communication fluidique avec l'ensemble de vannes (104), dans lequel l'ensemble de vannes de régulation (104) est configuré pour réguler le débit depuis une entrée (108) de l'injecteur (102) vers la buse (106), dans lequel l'injecteur (102) inclut un circuit de fluide (112) entre l'entrée (108) de l'injecteur et une sortie respective de la buse (106) ; et
une vanne séparée (114) reliée en communication fluidique avec l'ensemble de vannes de régulation (104), dans laquelle la vanne séparée est configurée pour ajuster la position d'un tiroir de vanne hydromécanique (116) de l'ensemble de vannes ;
dans lequel le tiroir de vanne (116) est maintenu en position fermée par un ou plusieurs éléments de rappel de l'ensemble de vanne de régulation, dans lequel le tiroir de vanne est configuré pour réguler le débit de l'entrée de l'injecteur vers le circuit de fluide, dans lequel le tiroir de vanne inclut une surface de régulation configurée pour faire varier la section de passage dans le circuit de fluide sur la base de la position du tiroir de vanne dans l'ensemble de vannes de régulation ; **caractérisé en ce que** :
la vanne séparée est une électrovanne (114) qui possède une entrée (122), une sortie (124) et un élément d'électrovanne (126) configuré pour contrôler le débit à travers l'électrovanne (114) de l'entrée (122) à la sortie (124) sur la base de la puissance électrique appliquée à une bobine électromagnétique (128) pour appliquer une force sur une armature de l'électrovanne, et dans laquelle l'entrée (122) de l'électrovanne est reliée en communication fluidique avec l'entrée (108) de l'injecteur, et **en ce que** la sortie (124) de l'électrovanne est reliée en communication fluidique avec le circuit de fluide (112), dans laquelle la sortie (124) de l'électrovanne est reliée au circuit de fluide (112) à une position dans le circuit de fluide (112) qui est en aval de l'ensemble de vannes (104).

2. Système selon la revendication 1, dans lequel la vanne séparée est une vanne ouverte/fermée discrète.

3. Système selon la revendication 1, dans lequel la vanne séparée est une vanne proportionnelle avec des conditions intermédiaires entre complètement ouverte et complètement fermée.

4. Système selon la revendication 3, dans lequel la vanne proportionnelle inclut un solénoïde proportionnel, un moteur pas à pas ou une servo-vanne à moteur de couple avec clapet et buse.

5. Système selon une quelconque revendication précédente, dans lequel le tiroir de vanne (116) inclut un piston (132) avec un orifice (136) traversant celui-ci, dans lequel le piston (132) et l'orifice (136) sont configurés pour réguler la différence de pression dans l'ensemble de vannes (104), et plus préférablement dans lequel l'orifice (136) est en communication fluidique en série entre l'entrée (108) de l'injecteur et l'entrée (122) de l'électrovanne.

6. Système pour un moteur à turbine à gaz, le système comprenant :
un injecteur (102) incluant un ensemble de vannes de régulation (104) et une buse (106) en communication fluidique avec l'ensemble de vannes (104), dans lequel l'ensemble de vannes de régulation (104) est configuré pour réguler le débit depuis une entrée (108) de l'injecteur (102) vers la buse (106), dans lequel l'injecteur (102) inclut un circuit de fluide (112) entre l'entrée (108) de l'injecteur et une sortie respective de la buse (106) ; et
une vanne séparée (114) reliée en communication fluidique avec l'ensemble de vannes de régulation (104), dans laquelle la vanne séparée est configurée pour ajuster la position d'un tiroir de vanne hydromécanique (116) de l'ensemble de vannes ;
dans lequel le tiroir de vanne (116) est maintenu en position fermée par un ou plusieurs éléments de rappel de l'ensemble de vanne de régulation, dans lequel le tiroir de vanne est configuré pour réguler le débit de l'entrée de l'injecteur vers le circuit de fluide, dans lequel le tiroir de vanne inclut une surface de régulation configurée pour faire varier la section de passage dans le circuit de fluide sur la base de la position du tiroir de vanne dans l'ensemble de vannes de régulation ; **caractérisé en ce que** :
la vanne séparée est une vanne à trois voies (114) incluant :
un premier orifice (140) en communication fluidique avec le circuit de fluide en aval de l'entrée de l'injecteur ;
un deuxième orifice (142) en communication fluidique avec l'entrée de l'injecteur ; et
un troisième orifice (144) en communication fluidique avec le tiroir de vanne pour ajuster sélectivement la position du tiroir de vanne dans l'ensemble de vannes sur la base de la pression de l'entrée de l'injecteur ou de la pression du circuit de fluide.

7. Système selon la revendication 6, dans lequel le premier orifice (140) de la vanne séparée est relié en communication fluidique avec une partie du circuit de fluide en aval du tiroir de vanne.

8. Système selon la revendication 6, dans lequel le troisième orifice (144) est relié en communication fluidique avec un piston arrière du tiroir de vanne.

9. Système selon une quelconque revendication précédente, comprenant en outre une pluralité d'injecteurs et un collecteur unique, dans lequel l'injecteur (102) est un premier injecteur parmi la pluralité d'injecteurs, chacun étant relié en communication fluidique avec le collecteur unique, et dans lequel le collecteur unique sert à alimenter en carburant chaque injecteur parmi la pluralité d'injecteurs, incluant le circuit de fluide du premier injecteur.

10. Système selon la revendication 9, dans lequel un premier sous-ensemble de la pluralité d'injecteurs sont des buses duplex passives ayant chacune un circuit primaire destiné à être utilisé indépendamment du circuit de fluide du premier injecteur, et un circuit secondaire configuré pour distribuer le carburant conjointement avec le circuit de fluide du premier injecteur.

11. Système selon la revendication 10, dans lequel le premier injecteur (102) est un premier injecteur dans un second sous-ensemble de la pluralité d'injecteurs, dans lequel chaque injecteur du second sous-ensemble est tel que décrit dans la revendication 1, incluant une vanne séparée respective telle que décrite dans la revendication 1 qui y est reliée.

12. Système selon la revendication 11, comprenant en outre un contrôleur (154) relié électriquement aux vannes séparées pour une commande groupée ou individuelle de celles-ci, et de préférence dans lequel la vanne séparée respective est une vanne proportionnelle avec des conditions intermédiaires entre complètement ouverte et complètement fermée, et plus préférablement dans lequel chacun des injecteurs de la pluralité d'injecteurs de carburant inclut un capteur de débit massique relié en fonctionnement au contrôleur pour fournir une rétroaction de débit massique au contrôleur.

13. Système selon la revendication 11, dans lequel le premier sous-ensemble d'injecteurs est groupé de manière circonférentielle décalé par rapport au second sous-ensemble d'injecteurs.

14. Système selon une quelconque revendication précédente, dans lequel la perte d'alimentation électrique de la vanne séparée entraîne le retour du tiroir de vanne (116) à une position déterminée par des composants mécaniques et régule le débit de carburant conformément à une surface de régulation.
